# EUROPEAN PATENT SPECIFICATION

(11) **EP 3 492 658 B1**
(45) Date of publication and mention of the grant of the patent: **02.06.2021**
(21) Application number: 18020549.4
(22) Date of filing: 23.10.2018
(51) Int. Cl.: E02D 29/14, E03F 5/06

(54) **A GROUND SURFACE ACCESS ASSEMBLY WITH SAFETY FEATURES**
ZUGANGSANORDNUNG FÜR EINE BODENOBERFLÄCHE MIT SICHERHEITSMERKMALEN
ENSEMBLE D'ACCÈS À LA SURFACE DU SOL PRÉSENTANT DES CARACTÉRISTIQUES DE SÉCURITÉ

(30) Priority: 24.10.2017 GB 201717454
(43) Date of publication of application: 05.06.2019
(73) Proprietor: Wrekin Holdings Limited, Lichfield, Staffordshire WS14 9TZ (GB)
(72) Inventor: Turner, Barry, Lichfield, Staffordshire WS14 9TZ (GB); Gibson, Simon John, Lichfield, Staffordshire WS14 9TZ (GB); Evans, Samantha Sarah Elizabeth, Lichfield, Staffordshire WS14 9TZ (GB); Ratcliffe, Liam Mark, Lichfield, Staffordshire WS14 9TZ (GB); Turner, Simon, Lichfield, Staffordshire WS14 9TZ (GB)
(74) Representative: Tart, Keith Raymond

(56) References cited:
- EP-A1- 0 084 510
- EP-A1- 0 814 204
- EP-A1- 1 154 080
- EP-A1- 3 415 698
- WO-A2-2008/050036
- GB-A- 474 250

## Description

### Technical Field

This invention relates to a ground surface access assembly having a removable hinged opening cover; and in particular to such an assembly with safety features that: secure the cover in the fully open position and assists release from this position by sideways tilting movement of the cover pivot axis.

### Background Art

Ground surface access assemblies are typically used in road drainage systems, for example, to provide covered access to an underground chamber Such assemblies principally comprise a mounting frame and a removable cover. These assemblies have to withstand heavy loads, imposed by vehicles passing thereover. This means that the covers are typically fabricated from cast (ductile) iron, or the like, and owing to their weight must be lifted in a safe manner. In order to facilitate access such covers are frequently pivotally mounted to the support frame. Such covers can typically be removed from their frame when in the fully open (cover surface at 90° or greater to frame base) or partially open position. When so removing/replacing a damaged/repaired cover an individual is likely to risk of personal injury, unless recommended, specialist-lifting gear is used.

Also, when such covers are in the fully open (pivoted) position they can unexpectedly fall back towards the normal closed position with the possible consequence of serious injury to an operative. For example, such unexpected closure may result from collision impact upon the cover. While means of retaining a cover securely in an open position are known, retention and release can require the lifting of, often heavy, covers upwardly away from the frame so placing operatives at risk of personal injury.

Also, pivotably mounted covers forming part of a ground access assembly can suffer damage to supporting pivot members when heavy loads pass there-over.

EP1154080A1 (Royer, Jaen-Claude) discloses an assembly comprising a frame with a hinged cover that can only be removed from the frame when a splint (13) is not present.

### Disclosure of Invention

An aim of the present invention is to provide a ground surface access assembly with advantageous safety features. Another aim is to provide an assembly where the cover is "loosely pivotally" mounted to the support frame and optionally cannot be removed from the support frame when in the partially of fully open (pivotally tilted) position. This provides a strong incentive for operatives to use approved lifting gear to lift the cover upwardly while its top surface is held in a generally horizontal position (rather than tilted relative to the frame).

A further aim is to provide an assembly wherein the pivotally mounted cover when open is less likely to be closed accidentally as a result of an unexpected impact thereupon and includes an automatic engagement mechanism that can be disengaged without lifting the entire cover member, so reducing the likelihood of a user suffering injury during such disengagement.

Another aim of the invention is to provide an assembly wherein the pivotally mounted cover is not subject to pivot member damage when very heavy loads pass there over.

In a first aspect the invention comprises a ground surface access assembly comprising a frame member having a frame base, and a cover member that when in a closed position seats within said frame member; further comprising: hinge means (M) formed by members located partly on opposite inner faces of a sidewall of said frame member and partly on a side face of the cover member, said members comprising a pivot member and a recess, wherein the pivot member loosely locates within said significantly larger recess, which is defined by inner walls and within which during opening and closing of the cover member said pivot member partially rotates relative to said recess; and wherein the assembly comprises two such hinge means (M); wherein the recesses have an open-end the width (Wo) of which relative to the width of the pivot members (Wp) is such that it only allows removal of the cover when the plane of an upper surface of said cover member surface is positioned generally parallel to the plane of the base of said frame member, thereby allowing said pivot members to exit said recesses unimpeded through said open end thereof as the cover member is lifted upwardly, characterised in that said two hinge means (M) together, during opening and closing, allow the cover member (14) to pivot relative to the frame member about an axis (A-A') that is not rigidly fixed but that may tilt by up to ± 5° in a horizontal and vertical plane, owing to said loose location of the pivot members within the recesses.

According to the invention, said tilt of several degrees in a horizontal plane or vertical plane may comprise up to ±5° from the normal (cover) closed position and preferably up to ±3° from the closed position.

Normally, the pivot shafts (16a, 16b) may substantially move in both a vertical and horizontal plane within the first and second recesses (20a, 20b) during opening and closing.

Preferably, during normal (closed) use the pivot members are not in contact with said inner walls of the frame member and so provide no support for the cover member within the frame, and therefore advantageously bear no load when traffic passes there over. This is achieved by allowing the pivot axis to move somewhat in both a vertical and horizontal direction.

Preferably, during opening and/or closing of the cover member said pivot member is not in continual contact with said inner walls that define said recess. This is achieved by allowing the pivot axis to move somewhat in both a vertical and horizontal direction.

Thus, the ground surface access assembly may comprise pivot members that project inwardly from said opposite inner walls of the frame member.

Alternatively, the ground surface access assembly may comprise pivot members that project outwardly from said opposite side faces of the cover member.

Preferably, during the last stages of opening the rear end of said cover member is automatically "securely located" in an open position by the action of a rear edge portion/component, comprising a ramp and an engagement slot; the cover member being guided by a ramp into an engagement slot located on the adjacent inner wall of the frame member. The ramp and the engagement slot form part of a crevice member that is an integral part of, or is attached to, an inner face of the frame sidewall. This is achieved by allowing the pivot axis to move somewhat in both a vertical and horizontal direction. Thus, the cover member cannot be detached from the frame member when the cover member is in its fully open position. Restricting the removal of the cover member in this way advantageously encourages an operative to use known specialist lifting gear.

Preferably, said cover member can be freed from said "securely located" position by raising a first hinged corner of the cover member such that the cover pivots slightly sideways about the other (second) hinged corner of the cover member and so tilts slightly sideways, allowed by said vertical tilting of the pivot axis A-A', thereby lifting the rear edge portion/component of the cover clear of the engagement slot. This is achieved by allowing the pivot axis to move somewhat in both a vertical and horizontal direction.

Preferably, during the last stages of closing the cover member a lower edge/face of said cover member pivots upon as it slides along on a pivot ramp located on the inner surface of the frame sidewall, and thereby lifts a rear edge underside portion of the cover member back onto the upper face of the frame support member. This is automatic engagement is achieved by allowing the pivot axis to move somewhat in both a vertical and horizontal direction.

Preferably, during the last stages of closing, the cover member is raised relative to the pivot members such that the pivot members are no longer in contact with said inner walls of said recesses. This is automatic separation of the pivot members from the inner walls is achieved by allowing the pivot axis to move somewhat in both a vertical and horizontal direction and advantageously protects the pivot members from damage in normal use due to very high loads passing over the assembly.

Preferably, during opening of said cover member relative to said frame member said opening motion is restrained by the abutment of an underside surface of the cover member against a frame support member or part of an inner wall of said frame member.

Preferably, the ground surface access assembly comprises recesses (defined by sidewalls) that are approximately: rounded-rectangular, ovoid or elliptical in shape (apart from any open ended portion).

Preferably, the pivot member is elliptical or circular in cross section.

### Brief Description of Drawings

The present invention is illustrated by the following diagrammatic figures in which:
Figure 1 shows perspective view of a preferred embodiment of a ground surface access assembly according to the present invention, comprising a frame and a two-part cover in its normal closed position;
Figure 2 shows a side-sectioned view (along the line Y-Y') of the assembly illustrated in Figure 1, with one part of the cover about to be removed from the frame and the other part of the cover in its normal closed position;
Figure 3 shows perspective view of the ground surface access assembly of Figure 1, with one part of the cover lifted clear of the frame and the other part of the cover in its normal closed position;
Figure 4 shows a side-sectioned view (along the line Y-Y') of the assembly illustrated in Figure 1, with one part of the cover removed and the other part in its normal closed position;
Figure 5 shows a side-sectioned view (along the line Z-Z') of the assembly illustrated in Figure 1 with one part of the cover slightly (10°) open and the other part in its fully closed position;
Figure 6 shows a side-sectioned view (along the line Z-Z') of the assembly illustrated in Figure 1 with one part of the cover fully open and locked in place, the other part of the cover being in its fully closed position;
Figure 7 shows the position of the pivot member relative to the cover recess at various stages during the opening/closing of the cover and finally in the locked open position;
Figure 8a and 8b show perspective views of selected portions of the inside wall of the frame member;
Figures 9a and 9b show perspective views of the first and second recesses located within the cover member;
Figure 10 shows perspective view of a second embodiment of a ground surface access assembly according to the present invention (with one part of the cover lifted clear of the frame and the other part of the cover in its normal closed position) where the recesses fully surround the pivot members and so are not open ended;
Figure 11 shows perspective view of a third embodiment of a ground surface access assembly according to the present invention, comprising a frame (with a two-part cover in a lifted clear closed position) where (in contrast to the preferred embodiment) the pivot members protrude outwardly from side faces of the cover member;
Figure 12a and 12b show perspective views of selected portions of the inside wall of the frame member where the recesses are formed within the frame member walls (third embodiment); and
Figure 13 shows a cover recess and a (frame) pivot member for a fourth embodiment of the present invention and in particular a cross- sectioned view of the pivot, located within the cover recess, thereby allowing pivotal movement of the cover relative to a frame member.

### Detailed Description

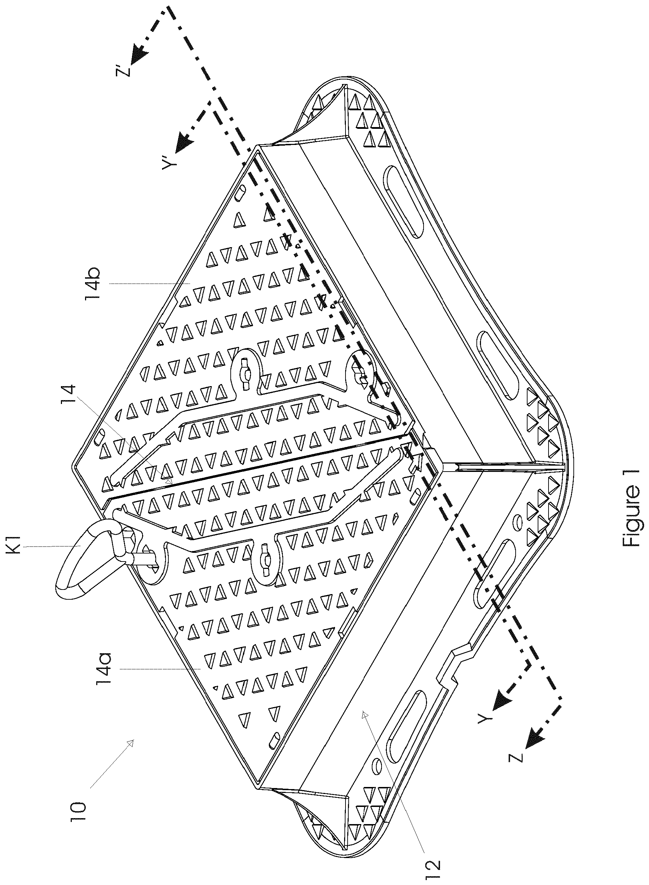

A preferred embodiment of the present invention will now be described in detail by reference to Figures 1 to 9.

Figure 1 shows a perspective drawing that illustrates a preferred embodiment of a ground surface access assembly (according to the present invention) in its normally closed position, when in use; allowing people and traffic to safely traverse the assembly. The ground surface assembly (10) comprises a generally rectangular shaped (in plan view) frame member (12) and a pair of triangular shaped (in plan view) cover portions (14a, 14b) that in normal use both seat side-by-side within the frame member (12). These two cover portions (14a, 14b), when side-by side, together form a generally rectangular shaped cover member (14) that is housed within the inner sidewalls (18) of the frame member (12). Each cover portion (14a, 14b) of the cover member (14) can be independently pivoted/tilted open. In use a removable key tool (K1) is used to enable such opening.

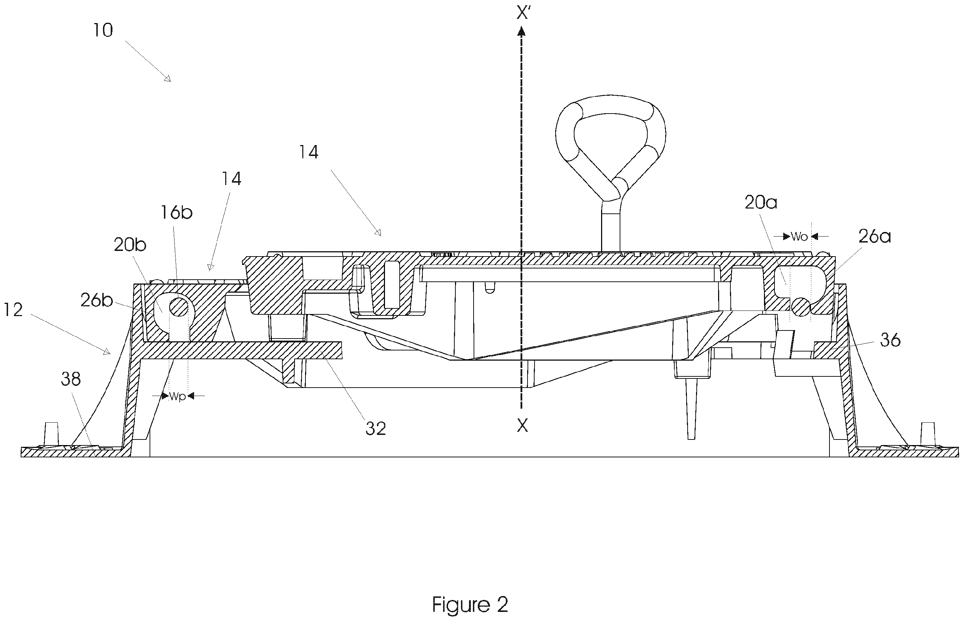

The illustration of Figure 2 shows a sectioned view (along the line Z-Z') of the assembly illustrated in Figure 1, where one of the cover portions (14b) is about to be removed from the frame member (12), having been upwardly lifted in a direction (X-X') that is generally perpendicular to the plane of the frame member base plate (38). Occasionally, (e.g. during service or replacement) it may be necessary to separate the cover portions (14a, 14b) from the frame member. The assembly (10) only allows such removal when the respective cover portion (14a, 14b) is lifted in the direction X-X'. Such removal will normally necessitate the use of conventional lifting gear; and thereby advantageously avoid possible injury to operatives; which is a characteristic disadvantage of known prior-art assemblies.

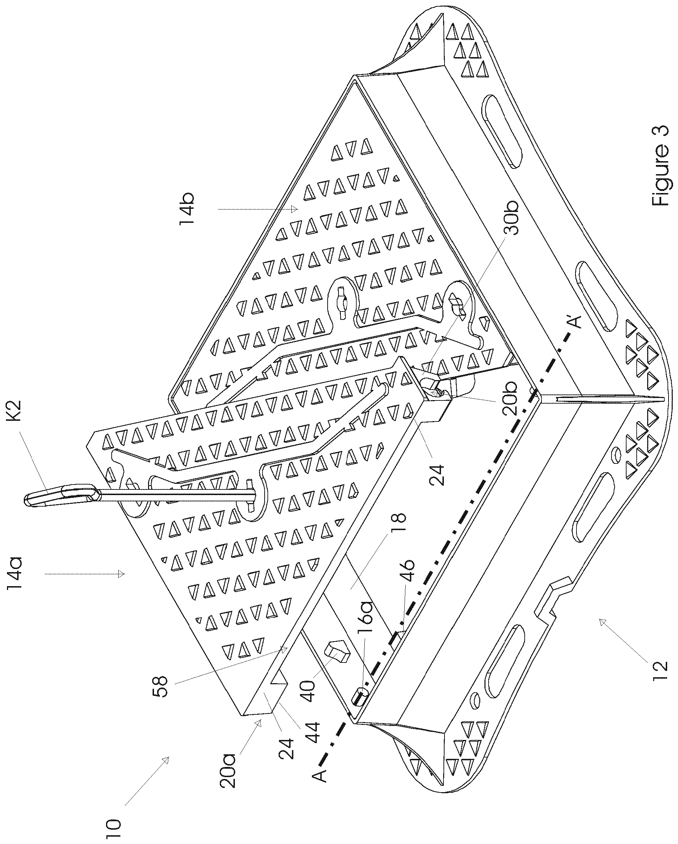

Figure 3 shows a perspective view of both cover portions (14a, 14b) and the frame member (12) with one cover portion (14a) lifted clear the frame member (12) and the other cover portion (14b) in its normal closed position. In normal use the covers may be pivoted to an open position using a standard lifting key (K2) that removably engages the cover and is sufficiently long to allow upward lifting of the cover by an operative without arching of the operative's back.

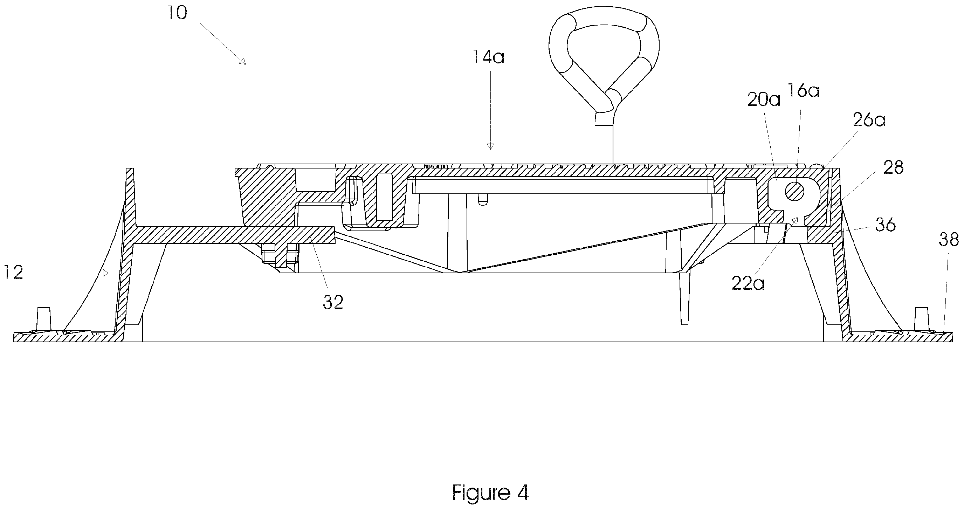

Figure 4 is a cross-sectioned view corresponding to that of Figure 2 that shows the first cover portion (14a) in the normal closed position and (for clarity) the second cover portion (14b) fully removed. Two pivot/abutment members (16a, 16b) are associated with each cover portion (14a, 14b) they are attached to or formed integrally with the frame member (12), and extend/protrude inwardly from opposing inner faces of the frame sidewall (18) of the frame member (12). Preferably, these pivot members (16a, 16b) are generally cylindrical in form, having a circular cross section.

Each cover portion (14a, 14b) has a first recess (20a) and second recess (20b) as illustrated in Figures 2 and 4. These are typically formed within part (24) of opposite sides of the cover portions (14a, 14b) that extend downwardly below the upper surface of the cover portions (see Figure 3), being located proximal a corner thereof. These recesses (20a, 20b) are defined by rounded-rectangular inner walls (26a) - apart from one wall that is approximately semi-circular in profile (see Figure 4), or by rounded ovoid walls (26b).

The pivot members (16a, 16b) and the first and second recesses (20a, 20b) are configured such that when the first or second cover portion (14a, 14b) are seated in their normal closed position the pivot members (16a, 16b) lie within the respective recess (20a, 20b) but are preferably not in contact with any part of the inside walls (26a, 26b) that define these recesses and so provides no support for the cover (14a). This advantageously ensures that, during normal use, when vehicles pass over the assembly no load is placed on the pivot members (16a, 16b); so avoiding possible damage thereof.

In normal use, the underside of each cover portion (14a, 14b) rest on a first frame support member (30) and a second frame support member (36). These support members (32, 36) extend inwardly from opposing inner faces of the frame sidewall (18) in a plane generally parallel to the frame base (38), and are typically an integral part of the frame member (12) and inner sidewalls (18).

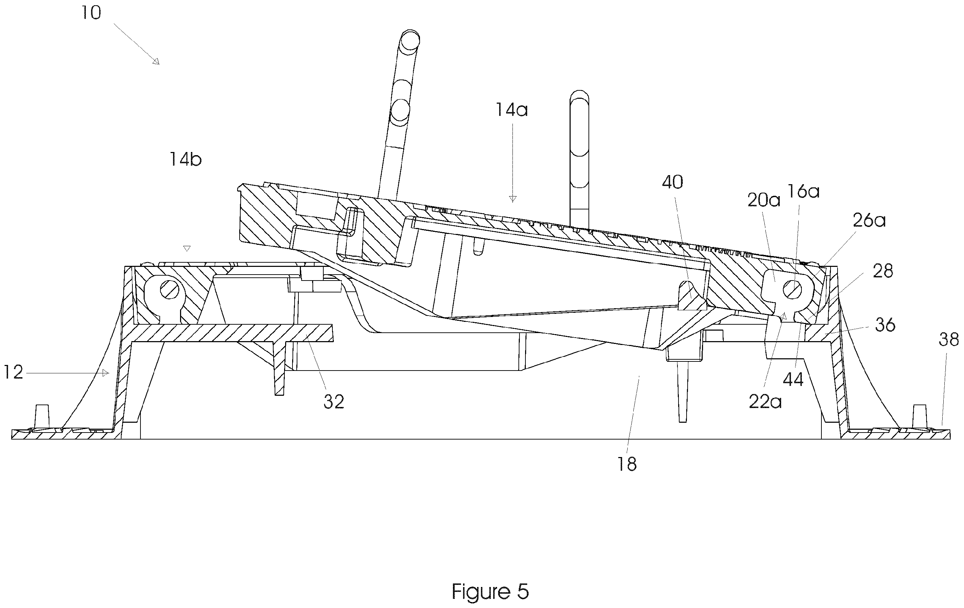

Figure 5 is a cross sectioned view along the line Y-Y' (see Figure 1) that shows one cover portion (14a) partially (10°) open. Each of the cover portions (14a, 14b) of the cover member (14) have a pair of recesses (20a, 20b), which partly engage a pair of pivot members (16a, 16b) extending or protruding inwardly from oppositely located inner sidewalls (18) of the frame member (12).

In particular, Figure 5 shows that the first recess (20a) and the second recess (20b) are open-ended, with the open-ends located on an underside face of the downwardly extending portion 24 (see above) of the cover portion (14a). The pivot member (16a) is partly/fully located within the first and second recesses (20a, 20b), and this restricts movement of the first cover portion (14a) relative to the frame member (12) as it is opened. The pivot members (16a, 16b) generally prevent detachment of the cover portion (14a) from the frame member (12) and, importantly, restrict opening movement of the cover portion (14a) relative to the frame member (12) to be approximately pivotal in nature. The recesses (20a, 20b) have an open-end (22a, 22b) the width (Wo) of which relative to the width (Wp) of the pivot members (16a, 16b) is such that it only allows removal of the cover when the plane of said cover portion (14a) surface is positioned generally parallel to the plane of the base plate (38) of the frame member 12 (see Figure 2), thereby allowing the pivot members (16a, 16b) to exit the recesses (20a, 20b) unimpeded through the open ends (22a, 22b) thereof as either cover portion (14a, 14b) is lifted upwardly (in a direction X-X').

The open ends (22a, 22b) typically take the form of a slot/gap the minimum width (Wo) of which is just slightly (e.g. 5-10% or 5-20%) larger than the width (Wp) of the pivot member (16). The slot/gap may be slightly tapered to assist removal. Thus, during such movement the pivot members (16a, 16b) do not restrict detachment of the cover portions (14a, 14b) from the frame member (12). However, if a user attempts to detach either cover portion (14a, 14b) when it is partly (tilted) open, for example as shown in Figure 5 the pivot members (16a,16b) will prevent such removal by abutting against an inner surfaces (26a, 26b) of the recesses (20a, 20b).

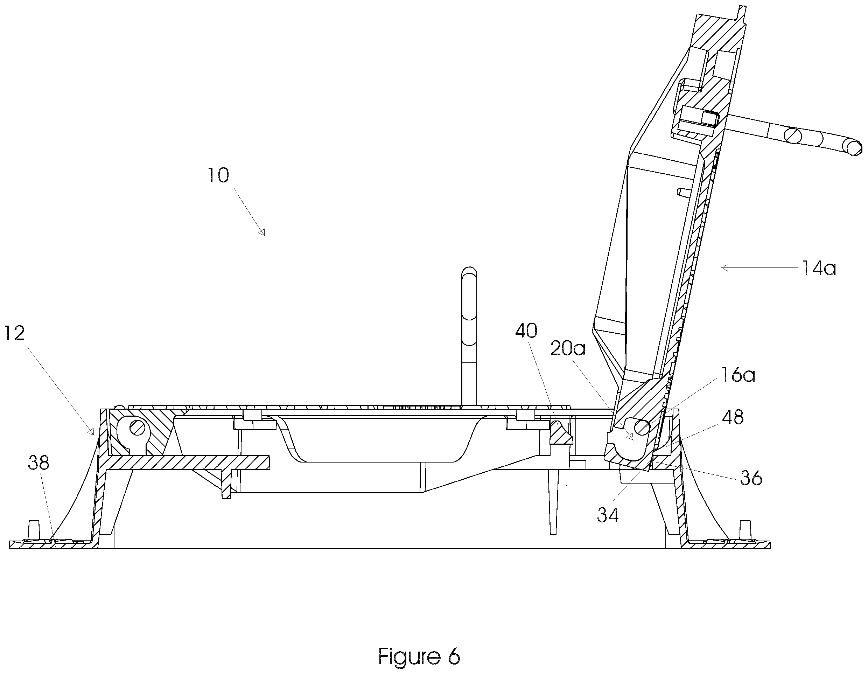

Figure 6 is a cross sectioned view along the line Y-Y' (see Figure 1) that shows just one cover portion (14a) fully open. When, in use, access to the chamber etc., below the assembly is required each of the cover members (14a, 14b) can individually be "pivoted" from the normal fully closed position to this fully open position.

The present invention also provides means of securely locating each cover portion (14a, 14b) in the open position. This is advantageous, as otherwise it is possible that an accidental impact against an open cover would cause them to slam shut and possibly injure an operative. In the present embodiment when one or both of the cover portions (14a, 14b) is in the fully open position (as shown in Figure 6) it is automatically so secured. To close such a secured and fully opened cover an operative merely has to slightly lift just one corner of the cover portion (14a, 14b) proximal to the recess 20a to disengage the securing feature, as explained in greater detail below.

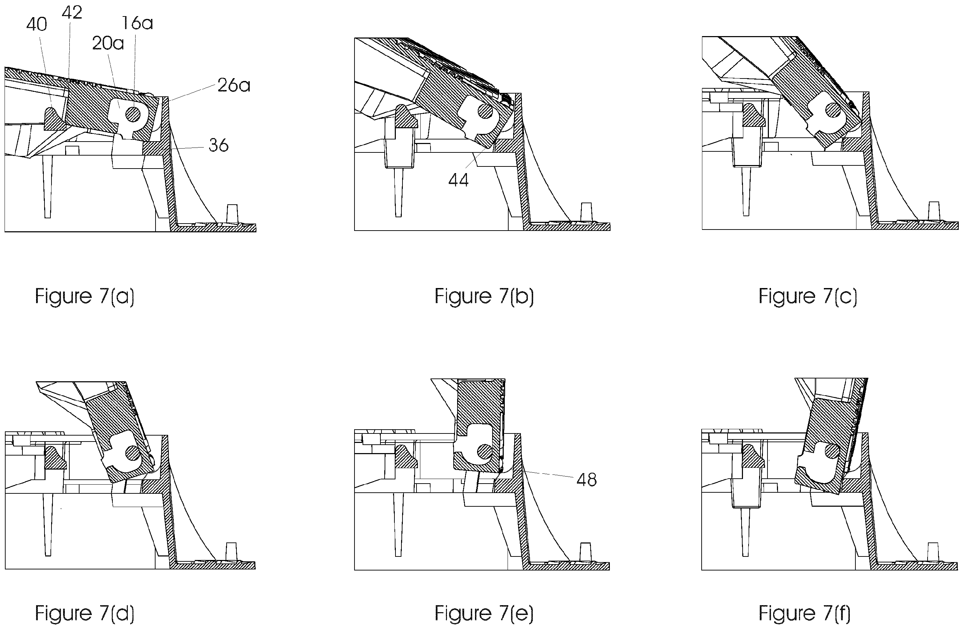

Figure 7(a)-7(g) show the position of the first pivot member (16a) relative to the first cover recess (20a) at various stages during the opening/closing and finally (Figure 7f) in the securely located open position.

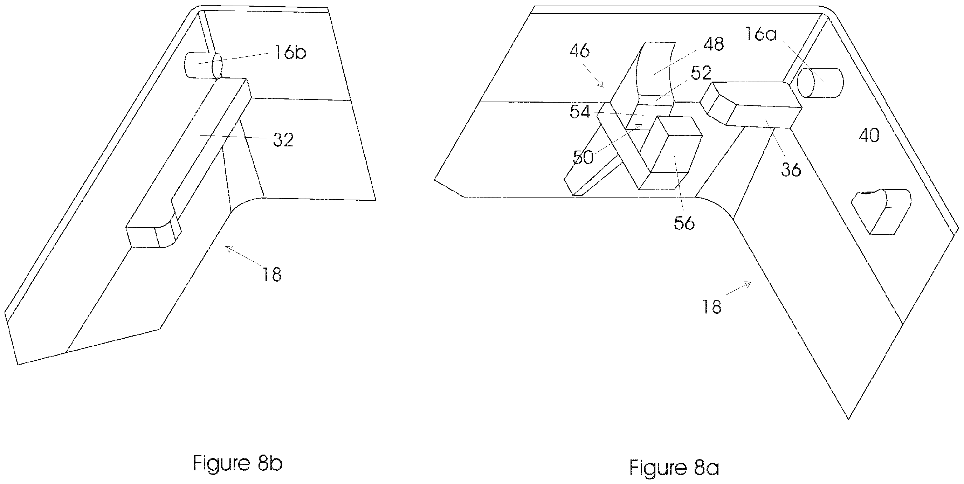

During initial opening of the cover portion (see Figure 7a) a lower edge/face portion (42) of downwardly extending portion 24 of the cover portion (14) is drawn onto the bottom edge of a pivot ramp/wedge (40) that like the pivot member (16a) extends inwardly from the (same) frame inner wall (18) and is normally an integral part thereof (see Figure 8a); this lower edge/face portion (42) then partially ascends the ramp/wedge (40) and thereby initially guides the cover portion (14) as it is opened.

When the cover portion (14) is opened to about the extent shown in Figure 7(b) the upper edge face portion (58) of cover (see Figure 3) abuts against the initial (upper - almost vertical) portion of an arcuate ramp (48) attached to an adjacent inner side wall (18) of the frame member (12), and this arcuate ramp (48) guides the cover as it is further opened through the stages illustrated in Figures 7(b) to 7(e). When the cover is in the position illustrated in Figure 7(e) the edge face portion (58) is in contact with the curved edge (52) (see Figure 8a) and is about to fall into an engagement slot (50). Thus, during the last stages of opening, the cover portion (14) is automatically "securely located" in an open position by the action of said rear edge portion (58) of the cover member (14) being guided by a ramp (48) into an engagement slot (50). This is possible as the combination of pivot member (16a) and first recess (20a) allow said slight sideways pivoting of cover during opening and closing because of the "only approximately pivotal" mounting whereby the pivot shaft (16a) may move multi-directionally within the first recess (20a) during opening and closing. The two pivot members (16a, 16b) and two recesses (20a, 20b) together form a pair of hinge means (M) that together during opening allow the cover member to pivot relative to the frame member about an axis (A-A') that is not rigidly fixed but that may, during opening and closing, tilt by several degrees in a horizontal and vertical plane to accommodate easier opening and closing of the cover. According to the invention, this tilt of several degrees in a horizontal plane or vertical plane may comprise up to ±5° from the normal (cover) closed position and preferably up to ±3° from the closed position.

Figure 7(f) shows this having taken place and so the cover is secured by portion 58 of the cover having engaged the slot 50.

Figure 7(h) shows the cover during the last stages of closing (a position intermediate those illustrated in Figures 7(a) and 7(b)) as the ramp/wedge 40 and the pivot member 16a jointly support the side edge (24) and side face (30) of the cover portion (14a) just before the lower edge (44) is automatically lifted onto the upper surface of the support member 36.

Thus, for example, in the fully open position (see Figure 7f) cover portion 14a no longer rests on the upper face of support member 36 but rather is held (securely located) in this fully open position by the abutment of pivot member 16a against the inside wall (26a) of the recess (20a) in combination with the above described securely locating features (50, 58). Figures 6 and 7(f) shows the pivot member (16a) located in a stable (corner) position within the first recess (20a).

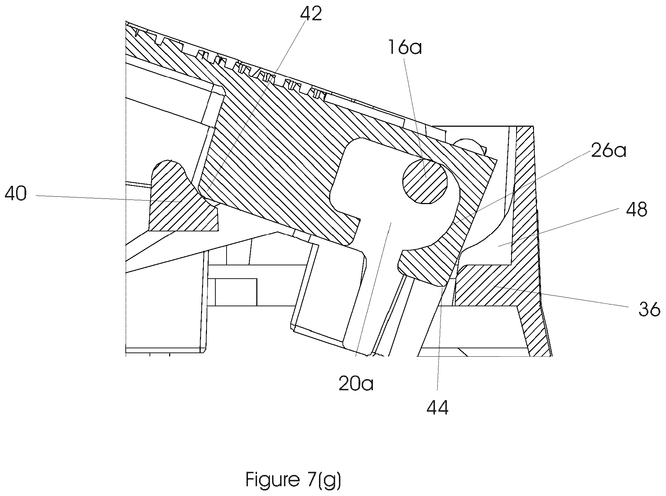

During most (but not all) of the opening/closing movement (see Figures 7b-7f) the pivot member (16a) abuts against an inside wall (26a) of the first recess (20a). Figure 7(a) corresponds to the position of the cover relative to the frame as shown in Figure 5 and Figure 7(f) corresponds to the position of the cover relative to the frame as shown in Figure 6. During the last stages of closing the cover (see Figure 7a and 7b) the lower edge/face 42 of the cover pivots on the pivot ramp (40) as it slides down this ramp (40) while at the same time the upper surface of the inside wall (26a) defining the recess (20s) abuts and pivots against the pivot member (16a) and thereby lifts (see Figure 7g) the lower edge (44) of the cover portion (14a) back onto the upper face of frame support member 36 - as shown in Figure 7a.

During closing of the cover just that (first) corner proximal recess 20a is raised/lifted slightly while that (second) corner proximal recess 20b is not raised; this results in the cover pivoting slightly about said second corner and a thereby disengaging the upper edge face portion (58) of the cover from the engagement slot (50), thereby allowing the stages illustrated in Figures 7(e) to 7(a) in that order to be passed through as the cover is closed, with the ramp/wedge (40) providing guidance of the cover in the final stage of closure. Thus, a lower edge/face portion (42) of downwardly extending portion 24 of the cover (14) abuts against a ramp/wedge (40) forming art of the frame (12) and thereby guides the cover (14a) into its desired fully closed position as shown in Figure 4
Figures 8(a) and 8(b) show perspective views of two opposite facing pivot members (16a, 16b) extending inwardly from the inside faces of opposing sidewalls (18). In particular, Figure 8(a) also shows a crevice member (46) that in cooperation with a side edge portion (58) of cover portion 14a (see Figure 3) provides an automatic locking (open) mechanism to help prevent accidental closure of either cover portion (see Figures 7e-7f).

Crevice member 46 comprises a arcuate-shaped smooth surface ramp portion (48) that at the upper end smoothly adjoins with the sidewall inner surface (18) and at the lower end leads to a second (steeper) curved edge (52) and a vertical face (54) which together with a retaining member (56) and a floor portion of the crevice member (46) forms an engagement slot (50). Thus, in the securely located (fully open) position, the side edge portion (58) of the sidewall adjoining the two "pivotably" mounted corners of the cover portion (14a) securely engages the slot 50. This position corresponds to that shown in Figure 7(f) as described earlier.

The cover member (14) may be a single component, rather than the two-part cover (14a, 14b) described above. In this event the cover member will typically be rectangular in shape (in plan view) but can have other shapes; for example it may comprise just one triangular member (as illustrated in item 14a above) and in such a case be housed within a triangular (in plan view) frame (not illustrated).

The configuration of a cover recess as defined by the recess walls (26) may vary. While Figure 2 does not show details of the second recess (20b) of the cover 14a this is identical to that for cover 14b illustrated in Figure 2. Both recesses (20a, 20b) have similar open-ended slots and these recesses are shaped to allow significant bi-directional movement of the pivot members (16a, 16b) within the recesses (20a, 20b) but at the same time provide a stable support position (see Figure 6) when the cover is in the fully open and locked position.

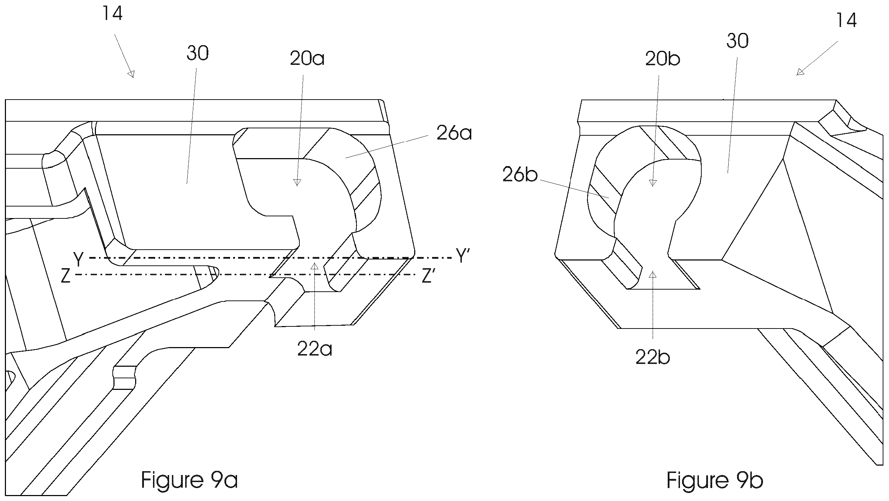

Figure 9(a) and 9(b) show enlarged perspective views of both recesses (20a, 20b). The cover portions (14a, 14b) both have a first recess (20a) that is approximately a rounded-rectangle and a second recess (20b) that is approximately ovoid in shape. The open ends (22a, 22b) of both recesses (20a, 20b) open onto a lower (underside face) of the cover. Throughout this specification "open end" refers to such (e.g. 22a, 22b) and never to the (additional) open-side of the recess that are (for example) rounded rectangular or ovoid in shape - these additional openings are an inevitable consequence of any recess located on the side portion of the cover or frame wall.

When the assembly has a single-piece cover (14) it will normally (loosely) engage just a pair of pivot members (16a, 16b) located on opposite inner faces of the frame sidewall (18) of the frame member (12). When the assembly comprises a two-part (14a, 14b) cover member (14) it will normally (loosely) engage two pairs of pivot members (16a, 16b), located on opposite inside walls (18) of the frame (see Figured 8a and 8b).

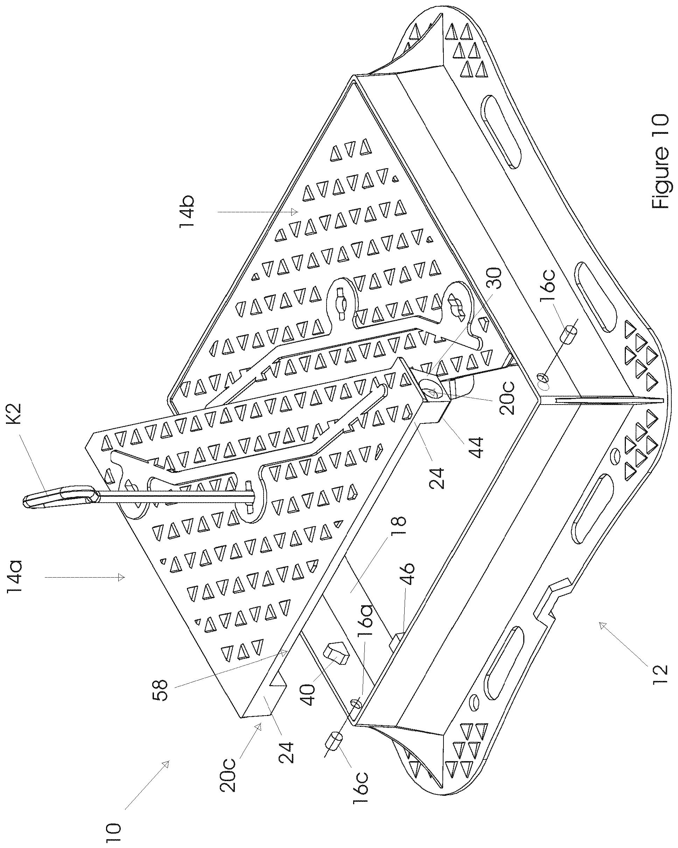

Figure 10 shows perspective view of a second embodiment of a ground surface access assembly according to the present invention (with one part of the cover lifted clear of the frame and the other part of the cover in its normal closed position) where the recesses (20c) fully surround the pivot members and so are not open ended (in contrast to other described embodiments). Otherwise this embodiment is substantially as described above (for the preferred embodiment). In this embodiment at least one of the pivot members (16c) is removable - to allow removal of the cover portions (14a, 14b) from the frame member (12). In all other respects this embodiment resembles the above-described preferred embodiment.

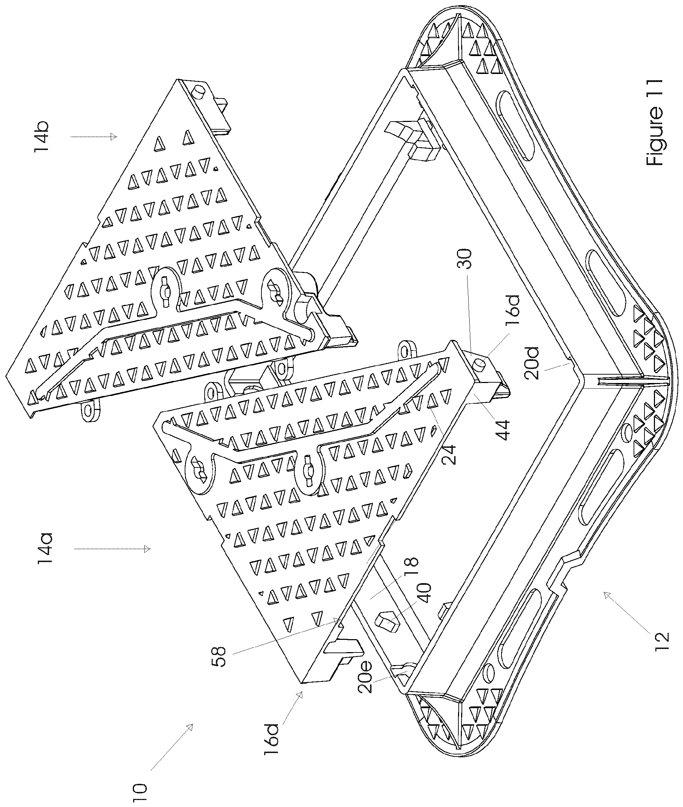

Figure 11 shows perspective view of a third embodiment of a ground surface access assembly according to the present invention, comprising a frame (with a two-part cover in a lifted clear closed position) where (in contrast to the preferred embodiment) the pivot members (16d) protrude outwardly from side faces (30) of the cover member and the recesses (20d, 20e) are located on opposing faces of inner side walls (18) of the frame member (12). Otherwise this embodiment is substantially as described above (for the preferred embodiment).

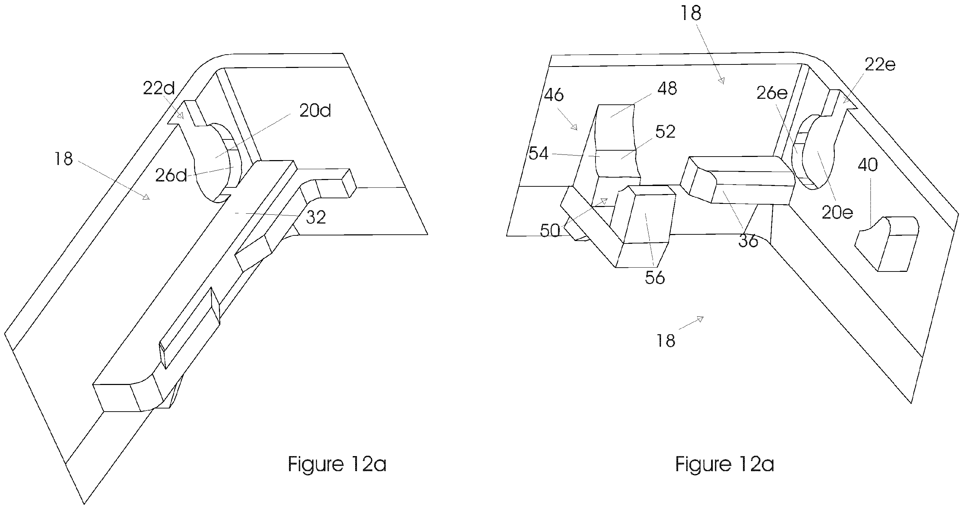

Figure 12a and 12b show perspective views of selected portions of the inside wall of the frame member for this third embodiment; the arrangement being similar to that illustrated in Figures 8a and 8b for the preferred embodiment except pivot members (16) are replaced by a pair of recesses (22d, 22e) formed within opposing frame inside walls (18).

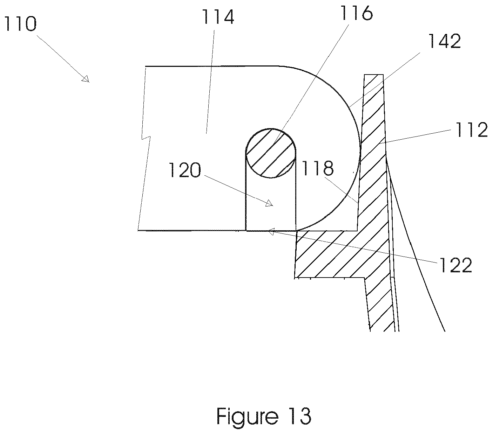

Figure 13 shows a cover recess and a (frame) pivot member for a fourth embodiment of the present invention and in particular a cross- sectioned view of the pivot, located within the cover recess, thereby allowing pivotal movement of the cover relative to a frame member.

The cover (114) recess (120) may be such that it does not allow significant unidirectional movement of the pivot member (116) relative to the recess (120); but rather the pivot member (116) always provides continuous support for the cover member (114) as it is pivoted from a fully closed to a fully open position. However, in such an embodiment the recess will still have an open-end (122) slot and so prevent removal of the cover member (114) from the frame (112) unless it is lifted upwardly relative to the frame base from a closed position, as shown in Figure 2. In this embodiment the recess (120) may take the form of a constant width slot (120) with a semi-circular closed end; and a cover member (114) may have a semi-circular edge face (142) configured to maintain a small (minimum) gap between its surface and the inside wall surface (118) of the support frame (112) as the cover is pivoted open.

The ground surface access assembly may comprise a frame member and a cover member wherein in normal use the cover member seats within said frame member, and further comprising: a first pivot member: said pivot member either extending from an inner face of the frame sidewall of said frame member, and also in normal use partly located within an open-ended first recess, wherein the open-end of which is located on an underside portion of said cover member; or said pivot member extends outwardly from a sidewall of said cover member, and also in normal use is partly located within an open-ended first recess, wherein the open-ended recess is located on an inner face of the frame sidewall of said frame member; and in either case the location of the first pivot member within said first recess allowing generally pivotal/tilting opening movement of said cover member relative to said frame, but preventing detachment of said cover member from said frame unless the plane of said cover member upper surface is positioned generally parallel to the plane of the frame base of said frame, thereby allowing said pivot member to exit said open-ended recess unimpeded through said open end thereof as the cover member is lifted upwards.

When (not illustrated) the pivot member extends outwardly from a sidewall of said cover member, and the open-ended recess is located on an adjacent (in normal use) inner face of the frame sidewall, the configuration of the pivot member and the recess and how they co-operate with each other to provide the generally pivotal/tilting opening movement are basically as illustrated for the preferred embodiment illustrated in Figures 1 to 9 except for their "inverted" location on the cover and frame wall

When the recess is located in the cover member the open-end normally opens onto a lower (underside face) of the cover. However, when the recess is located on the an inner face of the frame sidewall, either integrally or as part of a member attached to the sidewall, the open end of the recess is typically located in the upper (furthest from the frame base) portion of the recess so as to allow transit of the pivot member through said open-end and thus removal of the cover as it is lifted away from the frame in a direction that is generally perpendicular to the plane of the base of the frame member.

Normally, the ground surface access assembly comprises a first and second recess that engage a first pivot member and a second pivot member respectively; said first and second pivot members protruding/extending either outwardly from a sidewall of said cover member or inwardly from opposite inside walls of said frame member.

The ground surface access assembly may also comprise a frame member and a cover member that in normal use seats within said frame member, and further comprising: a first pivot member, extending from an inner sidewall of said frame member, and also in normal use partly located within an open-ended first recess: wherein the open-end of said open-ended recess is located on an underside portion of said cover member; the location of the first pivot member within said first recess allowing generally pivotal/tilting opening movement of said cover member relative to said frame, but preventing detachment of said cover member from said frame unless the plane of said cover member upper surface is positioned generally parallel to the plane of the frame base of said frame, thereby allowing said pivot member to exit said recess unimpeded through said open end thereof as the cover member is lifted upwards.

Preferably in both of the above aspects, during pivotal/tilting opening movement of said cover member part of an inner surface of defining the first recess pivots against and/or traverses in abutment against said pivot member, such during said opening the cover member is constrained to move in generally pivotal motion relative to said frame member. Normally, the inner surface that defines said first recess comprises only flat and/or curved surfaces.

Preferably, in both of the above aspects, the cover is seated in its normal closed position said pivot member lies within said recess but is not in contact with said inner surface thereof, and so provides no support for said cover.

Preferably, in both of the above aspects when the cover is seated in its normal closed position said pivot member lies within said recess, and provides pivotal support/guidance for said cover as it pivots from a closed to an open position.

Preferably, in both of the above aspects during the last stages of opening said cover is automatically "securely located" in an open position by the action of the rear edge portion/component of the cover member being guided by a ramp into an engagement slot.

Preferably, in both of the above aspects, both the ramp and the engagement slot form part of a crevice member that is an integral part of, or is attached to, an inner face of the frame sidewall.

Preferably, in both of the above aspects, the cover can be freed from said "securely located" position by raising that corner of the cover proximal said recess in a direction X-X' such that the cover tilts slightly sideways thereby lifting the rear edge portion/component of the cover clear of the engagement slot.

Preferably, during the last stages of closing the cover member, a lower edge/face of the cover abuts against and pivots on a pivot ramp located on the inner surface of the frame sidewall, and thereby lifts an underside corner edge of the cover back onto the upper face of the frame support member.

Normally, in both of the above aspects, the recess is defined by sidewalls to be approximately: rounded-rectangular; ovoid or elliptical in shape (apart from the open-ended portion).

Preferably, in both of the above aspects, the pivot member is elliptical or circular in cross section.

Preferably, in both of the above aspects, the cover member comprises a first cover member portion and a second cover member portion each cover member having at least a first recess that engages a first pivot member. Preferably, each cover member portion is generally triangular in shape when viewed from above (plan view).

Normally, the ground surface access assembly comprises a first and second recess that in engage a first pivot member and a second pivot member respectively; said first and second pivot members protruding either outwardly from said cover member or inwardly from opposite inside walls of said frame member. Preferably, the underside cover support portion of the cover member that defines said open end of said recess rests on a support member that extends inwardly from an inner wall of said frame member. Preferably, the assembly comprises a first recess and a second recess that are engaged by a first pivot member and a second pivot member; said first and second pivot members protruding inwardly from opposite inside walls of said frame member. Normally, each cover member comprises a first and second recess that in use each engage a first pivot member and a second pivot member; said first and second pivot members protruding inwardly from opposite inside walls of said frame member. Preferably, each cover member portion is generally triangular in shape when viewed from above (plan view).

The ground surface access assembly may also comprise a frame member and a cover member that when closed seats within said frame member and further comprising: a pivot member located on and extending inwardly from an inner sidewall within said frame member; an open-ended recess; said pivot member and recess being configured such that when said cover is seated in its normal closed position said pivot member lies within said first recess but may move multi-directionally within said recess during opening; thereby restraining opening motion of the cover member relative to said frame to be approximately pivotal; and also preventing detachment of said cover member from said frame unless said cover member is lifted, from its closed position, away from said frame in a direction generally perpendicular to the base of said frame, thereby allowing said pivot member to exit said recess unimpeded through the open end thereof, thereby allowing said removal. Preferably, during "approximately pivotal" opening of said cover relative to said frame member said opening motion is further restrained to be said "approximately pivotal" by the abutment of an underside surface of the cover member (against a frame support member or part of an inner wall of said frame member. This aspect also includes all of the preferred features described immediately above.

## Claims

1. A ground surface access assembly (10) comprising a frame member (12) having a frame base (38), and a cover member (14) that when in a closed position seats within said frame member (12); further comprising: hinge means (M) formed by members located partly on opposite inner faces of a sidewall (18) of said frame member (12) and partly on a side face (30) of the cover member (14), said members comprising a pivot member (16) and a recess (20), wherein the pivot member (16) loosely locates within said significantly larger recess (20), which is defined by inner walls (26) and within which during opening and closing of the cover member (14) said pivot member (16) partially rotates relative to said recess (20); and wherein the assembly (10) comprises two such hinge means (M); wherein the recesses (20) have an open-end (22), the width (Wo) of which relative to the width of the pivot members (Wp) is such that it only allows removal of the cover when the plane of an upper surface of said cover member (14) surface is positioned generally parallel to the plane of the base (38) of said frame member (12), thereby allowing said pivot members (16) to exit said recesses (20) unimpeded through said open end (22) thereof as the cover member (14) is lifted upwardly, **characterised in that** said two hinge means (M) together, during opening and closing, allow the cover member (14) to pivot relative to the frame member (12) about an axis (A-A') that is not rigidly fixed but that may tilt by up to 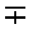 5° in a horizontal and vertical plane, owing to said loose location of the pivot members (16) within the recesses (20).

2. A ground surface access assembly (10) according to Claim 1 wherein the pivot members comprise shafts (16a, 16b) that may move in both a vertical and horizontal plane within the first and second recesses (20a, 20b) during opening and closing.

3. A ground surface access assembly (10) according to any preceding claim where during normal, closed use, the pivot members (16) are not in contact with said inner walls (26) of the recess (20) and so provide no support and bear no load when traffic passes there-over.

4. A ground surface access assembly (10) according to any preceding claim where during opening and/or closing of the cover member (14) said pivot member is not in continual contact with said inner walls (26) that define said recess (20).

5. A ground surface access assembly (10) according to any preceding claim where the pivot members (16) projects inwardly from said opposite inner faces of the sidewalls (18) of the frame member (12).

6. A ground surface access assembly (10) according to any preceding claim where the pivot members (16) projects outwardly from said opposite side faces (30) of the cover member (12).

7. A ground surface access assembly (10) according to any preceding claim wherein during the last stages of opening of the cover member (14), a rear edge portion (58) of said cover member (14) is automatically "securely located" in an open position by the action of the rear edge portion (58) of the cover member (14) being guided by a guide ramp (48) into an engagement slot (50) located on an adjacent inner face of the sidewall (18) of the frame member (12).

8. A ground surface access assembly (10) according to Claim 7 where both the guide ramp (48) and the engagement slot form (50) part of a crevice member (46) that is an integral part of, or is attached to, an inner face of the frame sidewall (18).

9. A ground surface access assembly (10) according to Claim 7 wherein said cover member (14) can be freed from said "securely located" position by raising a first hinged corner of the cover member (14) such that the cover pivots about the other (second) hinged corner of the cover member and so tilts slightly sideways, allowed by vertical tilting of the axis A-A', thereby lifting the rear edge portion/component of the cover (58) clear of the engagement slot (50).

10. A ground surface access assembly (10) according to any preceding wherein during the last stages of closing the cover member (14) a lower edge/face portion (42) of said cover member (14) pivots on, as it slides along, a pivot ramp (40) located on the inner surface of the frame sidewall (18), and thereby lifts a rear edge portion (58) of said cover member (14) back onto an upper face of a the- frame support member (36).

11. A ground surface access assembly according to Claim 10 where during said last stages of closing said cover member (14) is raised relative to the pivot member (16a) such that the pivot member (16a) is no longer in contact with said inner walls (26a) of said recess (20a).

12. A ground surface access assembly according to any preceding claim wherein during opening of said cover member (14) relative to said frame member (12) the opening motion is restrained by the abutment of an underside surface (28) of the cover member (14) against frame support members (32, 36) or part of an inner wall (18) of said frame member (12).

13. A ground surface access assembly (10) according to any preceding claim wherein the recess (20) is defined by inner walls (26) to be approximately: rounded-rectangular, ovoid or elliptical in shape, an open ended portion (22) excluded.

14. A ground surface access assembly (10) according to any preceding claim wherein the pivot member (16) is elliptical or circular in cross section.

## Patentansprüche

1. Anordnung (10) für den Zugang von einer Geländeoberfläche, umfassend ein Rahmenelement (12) mit einer Rahmenbasis (38) und ein Deckelelement (14), das, wenn es sich in einer geschlossenen Stellung befindet, in dem Rahmenelement (12) aufliegt; ferner umfassend: ein Gelenkmittel (M), das von Elementen gebildet wird, die teilweise auf gegenüberliegenden Innenflächen einer Seitenwand (18) des Rahmenelements (12) und teilweise auf einer Seitenfläche (30) des Deckelelements (14) angeordnet sind, wobei die Elemente ein Drehachsenelement (16) und eine Aussparung (20) umfassen, wobei das Drehachsenelement (16) locker in der erheblich größeren Aussparung (20) sitzt, die von Innenwänden (26) definiert wird und in der sich das Drehachsenelement (16) während des Öffnens und Schließens des Deckelelements (14) teilweise relativ zu der Aussparung (20) dreht; und wobei die Anordnung (10) zwei derartige Gelenkmittel (M) umfasst; wobei die Aussparungen (20) ein offenes Ende (22) aufweisen, dessen Breite (Wo) relativ zu der Breite der Drehachsenelemente (Wp) derart ist, dass es das Abnehmen des Deckels nur dann ermöglicht, wenn die Ebene einer oberen Oberfläche der Oberfläche des Deckelelements (14) allgemein parallel zu der Ebene der Basis (38) des Rahmenelements (12) positioniert ist, wodurch den Drehachsenelementen (16) ermöglicht wird, aus den Aussparungen (20) durch das offene Ende (22) derselben ungehindert auszutreten, wenn das Deckelelement (14) nach oben gehoben wird, **dadurch gekennzeichnet, dass** die zwei Gelenkelemente (M) zusammen während des Öffnens und Schließens dem Deckelelement (14) ermöglichen, sich relativ zu dem Rahmenelement (12) um eine Achse (A-A') zu drehen, die nicht starr fixiert ist, sondern die dank des lockeren Sitzes der Drehachsenelemente (16) in den Aussparungen (20) um bis zu + 5° in einer horizontalen und einer vertikalen Ebene kippen kann.

2. Anordnung (10) für den Zugang von einer Geländeoberfläche nach Anspruch 1, wobei die Drehachsenelemente Zapfen (16a, 16b) umfassen, die sich während des Öffnens und Schließens in sowohl einer vertikalen als auch einer horizontalen Ebene in der ersten und der zweiten Aussparung (20a, 20b) bewegen können.

3. Anordnung (10) für den Zugang von einer Geländeoberfläche nach einem der vorangehenden Ansprüche, wobei sich die Drehachsenelemente (16) während des normalen, geschlossenen Gebrauchs nicht mit den Innenwänden (26) der Aussparung (20) in Kontakt befinden und somit keine Unterstützung bereitstellen und keine Last tragen, wenn sich Verkehr darüber hinweg bewegt.

4. Anordnung (10) für den Zugang von einer Geländeoberfläche nach einem der vorangehenden Ansprüche, wobei sich das Drehachsenelement während des Öffnens und/oder Schließens des Deckelelements (14) nicht mit den Innenwänden (26), die die Aussparung (20) definieren, in ständigem Kontakt befindet.

5. Anordnung (10) für den Zugang von einer Geländeoberfläche nach einem der vorangehenden Ansprüche, wobei die Drehachsenelemente (16) von den gegenüberliegenden Innenflächen der Seitenwände (18) des Rahmenelements (12) nach innen ragen.

6. Anordnung (10) für den Zugang von einer Geländeoberfläche nach einem der vorangehenden Ansprüche, wobei die Drehachsenelemente (16) von den gegenüberliegenden Seitenflächen (30) des Deckelelements (12) nach außen ragen.

7. Anordnung (10) für den Zugang von einer Geländeoberfläche nach einem der vorangehenden Ansprüche, wobei während der letzten Phasen des Öffnens des Deckelelements (14) ein Hinterkantenabschnitt (58) des Deckelelements (14) durch die Wirkung des Hinterkantenabschnitts (58) des Deckelelements (14), der von einer Führungsschräge (48) in eine auf einer benachbarten Innenfläche der Seitenwand (18) des Rahmenelements (12) angeordneten Einrastnut (50) geführt wird, automatisch in den "festen Sitz" in einer offenen Stellung gebracht wird.

8. Anordnung (10) für den Zugang von einer Geländeoberfläche nach Anspruch 7, wobei sowohl die Führungsschräge (48) als auch die Einrastnut (50) einen Teil eines Spaltelements (46) bilden, das einstückig mit einer Innenfläche der Rahmenseitenwand (18) ausgebildet oder daran befestigt ist.

9. Anordnung (10) für den Zugang von einer Geländeoberfläche nach Anspruch 7, wobei das Deckelelement (14) aus der "fest sitzenden" Stellung gelöst werden kann, indem eine erste gelenkig angebrachte Ecke des Deckelelements (14) angehoben wird, sodass sich der Deckel um die andere (zweite) gelenkig angebrachte Ecke dreht und somit etwas zur Seite kippt, was durch das vertikale Kippen der Achse A-A' ermöglicht wird, wodurch der Hinterkantenabschnitt/die Hinterkantenkomponente des Deckels (58) komplett aus der Einrastnut (50) heraus gehoben wird.

10. Anordnung (10) für den Zugang von einer Geländeoberfläche nach einem der vorangehenden, wobei während der letzten Phasen des Schließens des Deckelelements (14) ein unterer Kanten-/Flächenabschnitt (42) des Deckelelements (14), sich auf einer auf der inneren Oberfläche der Rahmenseitenwand (18) angeordneten Drehschräge (40) dreht, während er daran entlang gleitet, und dadurch einen Hinterkantenabschnitt (58) des Deckelelements (14) auf eine obere Fläche eines Rahmenstützelements (36) zurück hebt.

11. Anordnung für den Zugang von einer Geländeoberfläche nach Anspruch 10, wobei während der letzten Phasen des Schließens das Deckelement (14) relativ zu dem Drehachsenelement (16a) angehoben wird, sodass sich das Drehachsenelement (16a) nicht mehr mit den Innenwänden (26a) der Aussparung (20a) in Kontakt befindet.

12. Anordnung für den Zugang von einer Geländeoberfläche nach einem der vorangehenden Ansprüche, wobei während des Öffnens des Deckelelements (14) relativ zu dem Rahmenelement (12) die Öffnungsbewegung durch das Anliegen einer Unterseitenoberfläche (28) des Deckelelements (14) an Rahmenstützelementen (32, 36) oder einem Teil einer Innenwand (18) des Rahmenelements (12) eingeschränkt wird.

13. Anordnung (10) für den Zugang von einer Geländeoberfläche nach einem der vorangehenden Ansprüche, wobei die Aussparung (20) von Innenwänden (26) definiert wird, um mit Ausnahme eines offenendigen Abschnitts (22) ungefähr:
eine gerundet-rechteckige, ovoide oder elliptische Form aufzuweisen.

14. Anordnung (10) für den Zugang von einer Geländeoberfläche nach einem der vorangehenden Ansprüche, wobei das Drehachsenelement (16) einen elliptischen oder kreisförmigen Querschnitt aufweist.

## Revendications

1. Ensemble d'accès à la surface du sol (10) comprenant un élément formant cadre (12) comportant une base de cadre (38), et un élément formant couvercle (14) qui, lorsqu'il se trouve dans une position fermée, est placé à l'intérieur dudit élément formant cadre (12) ; comprenant en outre : des moyens formant charnières (M) formés par des éléments situés en partie sur des faces intérieures opposées d'une paroi latérale (18) dudit élément formant cadre (12) et en partie sur une face latérale (30) de l'élément formant couvercle (14), lesdits éléments comprenant un élément formant pivot (16) et une cavité (20), l'élément formant pivot (16) étant disposé avec jeu à l'intérieur de ladite cavité (20) considérablement plus grande, qui est définie par des parois intérieures (26) et à l'intérieur de laquelle, lors de l'ouverture et la fermeture de l'élément formant couvercle (14), ledit élément formant pivot (16) effectue une rotation partielle par rapport à ladite cavité (20) ; et l'ensemble (10) comprenant deux desdits moyens formant charnières (M) ; les cavités (20) comportant une extrémité ouverte (22), dont la largeur (Wo) par rapport à la largeur (Wp) des éléments formant pivots est telle qu'elle ne permet le retrait du couvercle que lorsque le plan d'une surface supérieure de ladite surface de l'élément formant couvercle (14) est positionné globalement parallèlement au plan de la base (38) dudit élément formant cadre (12), ceci permettant auxdits éléments formant pivots (16) de sortir desdites cavités (20) sans entrave à travers ladite extrémité ouverte (22) de celles-ci lorsque l'élément formant couvercle (14) est soulevé, **caractérisé en ce que** lesdits deux moyens formant charnières (M), lors de l'ouverture et la fermeture, permettent conjointement à l'élément formant couvercle (14) de pivoter par rapport à l'élément formant cadre (12) autour d'un axe (A-A') qui n'est pas strictement fixe et peut prendre une inclinaison allant jusqu'à + 5° dans un plan horizontal et vertical, en raison de ladite disposition avec jeu des éléments formant pivots (16) à l'intérieur des cavités (20).

2. Ensemble d'accès à la surface du sol (10) selon la revendication 1, dans lequel les éléments formant pivots comprennent des tiges (16a, 16b) qui peuvent se déplacer dans un plan à la fois vertical et horizontal à l'intérieur des première et seconde cavités (20a, 20b) lors de l'ouverture et la fermeture.

3. Ensemble d'accès à la surface du sol (10) selon l'une quelconque des revendications précédentes, dans lequel, lors d'une utilisation normale en position fermée, les éléments formant pivots (16) ne sont pas en contact avec lesdites parois intérieures (26) de la cavité (20) et, par conséquent, n'assurent aucun soutien et ne portent aucune charge lorsque des véhicules passent sur celui-ci.

4. Ensemble d'accès à la surface du sol (10) selon l'une quelconque des revendications précédentes, dans lequel, lors de l'ouverture et/ou la fermeture de l'élément formant couvercle (14), ledit élément formant pivot n'est pas en contact continu avec lesdites parois intérieures (26) qui définissent ladite cavité (20).

5. Ensemble d'accès à la surface du sol (10) selon l'une quelconque des revendications précédentes, dans lequel les éléments formant pivots (16) font saillie vers l'intérieur à partir desdites faces intérieures opposées des parois latérales (18) de l'élément formant cadre (12).

6. Ensemble d'accès à la surface du sol (10) selon l'une quelconque des revendications précédentes, dans lequel les éléments formant pivots (16) font saillie vers l'extérieur à partir desdites faces latérales opposées (30) de l'élément formant couvercle (12).

7. Ensemble d'accès à la surface du sol (10) selon l'une quelconque des revendications précédentes, dans lequel, lors des dernières étapes de l'ouverture de l'élément formant couvercle (14), une partie formant bord arrière (58) dudit élément formant couvercle (14) est automatiquement « calée » dans une position ouverte par l'action de la partie formant bord arrière (58) de l'élément formant couvercle (14) qui est guidée par une rampe de guidage (48) de sorte qu'elle pénètre dans une rainure de mise en prise (50) située sur une face intérieure adjacente de la paroi latérale (18) de l'élément formant cadre (12).

8. Ensemble d'accès à la surface du sol (10) selon la revendication 7, dans lequel la rampe de guidage (48) et la rainure de mise en prise (50) font toutes deux parties d'un élément formant cran (46) qui fait partie intégrante d'une face intérieure de la paroi latérale (18) du cadre ou est fixé à celle-ci.

9. Ensemble d'accès à la surface du sol (10) selon la revendication 7, dans lequel ledit élément formant couvercle (14) peut être dégagé de ladite position où il est « calé » en élevant un premier coin articulé de l'élément formant couvercle (14) de telle sorte que le couvercle pivote autour de l'autre (du second) coin articulé de l'élément formant couvercle et s'incline ainsi légèrement latéralement, par le biais d'une inclinaison verticale de l'axe A-A', ceci soulevant la partie/le composant formant bord arrière du couvercle (58) de façon à l'extraire de la rainure de mise en prise (50).

10. Ensemble d'accès à la surface du sol (10) selon l'une quelconque des précédentes, dans lequel, lors des dernières étapes de la fermeture de l'élément formant couvercle (14), une partie formant bord/face inférieur(e) (42) dudit élément formant couvercle (14) pivote, à mesure qu'elle glisse le long de celle-ci, sur une rampe de pivotement (40) située sur la surface intérieure de la paroi latérale (18) du cadre, et soulève ainsi une partie formant bord arrière (50) dudit élément formant couvercle (14) de façon à la ramener sur une face supérieure d'un élément de support (36) du cadre.

11. Ensemble d'accès à la surface du sol selon la revendication 10, dans lequel, lors desdites dernières étapes de la fermeture, ledit élément formant couvercle (14) est élevé par rapport à l'élément formant pivot (16a) de telle sorte que l'élément formant pivot (16a) n'est plus en contact avec lesdites parois intérieures (26a) de ladite cavité (20a).

12. Ensemble d'accès à la surface du sol selon l'une quelconque des revendications précédentes, dans lequel, lors de l'ouverture dudit élément formant couvercle (14) par rapport audit élément formant cadre (12), le mouvement d'ouverture est limité par le fait qu'une surface de dessous (28) de l'élément formant couvercle (14) est en butée contre des éléments de support (32, 36) du cadre ou une partie d'une paroi intérieure (18) dudit élément formant cadre (12).

13. Ensemble d'accès à la surface du sol (10) selon l'une quelconque des revendications précédentes, dans lequel la cavité (20) est définie par des parois intérieures (26) de façon à être approximativement :
de forme rectangulaire arrondie, ovoïde ou elliptique, à l'exclusion d'une partie à extrémité ouverte (22).

14. Ensemble d'accès à la surface du sol (10) selon l'une quelconque des revendications précédentes, dans lequel l'élément formant pivot (16) présente une section transversale elliptique ou circulaire.
